# EUROPÄISCHE PATENTANMELDUNG

(11) **EP 1 867 894 A2**
(43) Veröffentlichungstag der Anmeldung: **19.12.2007**
(21) Anmeldenummer: 07117863.6
(22) Anmeldetag: 07.12.2002
(51) Int. Cl.: F16H 59/04

(54) **Lageranordnung zur schwenkbaren Lagerung eines Schalthebels**

(30) Priorität: 31.01.2002 US 353555 P; 02.02.2002 DE 10204282
(62) Teilanmeldung aus: 02027348.8
(71) Anmelder: Schaeffler KG, 91074 Herzogenaurach (DE)
(72) Erfinder: Krämer, Klaus, 91460 Baudenbach (DE); Hauck, Susanne, 91074 Herzogenaurach (DE)

(57) **Zusammenfassung**

Die Erfindung betrifft Lageranordnung (1, 29) zur schwenkbaren Lagerung eines Schalthebels (2, 35) mittels einer Konsole (10, 31) in einem Gehäuse (3), wobei die Lageranordnung (1, 29) den Schalthebel (2, 35) in der Konsole (10, 31) um eine Schwenkachse (8a, 36) zu der Konsole (10, 31) schwenkbar lagert sowie den Schalthebel (2, 35) mit der Konsole (10, 31) um eine quer zur Schwenkachse (8a, 36) ausgerichtete Kippachse (9a, 34) schwenkbar zu dem Gehäuse (3) lagert.

## Beschreibung

### Gebiet der Erfindung

Die Erfindung betrifft eine Lageranordnung zur schwenkbaren Lagerung eines Schalthebels mittels einer Konsole in einem Gehäuse, wobei die Lageranordnung den Schalthebel in der Konsole um eine Schwenkachse zu der Konsole schwenkbar lagert sowie den Schalthebel mit der Konsole um eine quer zur Schwenkebene ausgerichtete Kippachse schwenkbar zu dem Gehäuse lagert und wobei der Schalthebel an einem freien Ende einen um die Kippachse sowie die Schwenkachse schwenkbaren Schaltfinger aufweist.

### Hintergrund der Erfindung

DE 43 09 861 C1 beschreibt eine Schaltvorrichtung zum Schalten von Gangrädern mittels eines Schalthebels. Eines oder zwei auf einer Getriebewelle liegende wahlweise schaltbare Gangräder sind jeweils einer Gasse zugeordnet. Durch die Schaltvorrichtung sind mehrere Gangräder schaltbar. Mindestens ein Gangrad oder maximal zwei Gangräder sind einer Gasse zugeordnet. Jedes Gangrad ist nur in seiner vorbestimmten Gasse schaltbar.

Der Schalthebel ist mittels einer Lageranordnung zu einem Gehäuse schwenkbar angeordnet. Die Lageranordnung ermöglicht Schwenkbewegungen des Schalthebels in einer Wählebene und in einer quer zur Wählebene ausgerichteten Schaltebene. Während der Wähl- und Schaltvorgänge ist der Schalthebel mittels einer Kulisse geführt.

Der Schalthebel steht in der Wählebene in einer Neutralstellung und ist in der Wählebene aus der Neutralstellung durch die Wahl von Gassen wahlweise in eine von mindestens zwei Ruhestellungen schwenkbar. Steht der Schalthebel in einer der Ruhestellungen, ist eine Gasse gewählt. Aus der Ruhestellung ist der Schalthebel in der Schaltebene zum Schalten eines der Gängen in eine Schaltstellung schwenkbar. Die Neutralstellung des Schalthebels ist zumeist auch eine der Ruhestellungen, aus der wahlweise einer von zwei Gängen schaltbar ist.

In den Ruhestellungen bzw. in der Neutralstellung des Schalthebels stehen Schaltschienen in einer mittleren neutralen Stellung, in welcher die mittels der Schaltschienen schaltbaren Gänge nicht geschaltet sind. Der Schalthebel ist an einem freien Ende mit einem Schaltfinger versehen. Jede der Schaltschienen weist eine Eingriffsnut bzw. ein Schaltmaul für den Eingriff des Schaltfingers auf. Durch Wählbewegungen des Schalthebels wird wahlweise in eine von mindestens zwei achsparallelen Schaltschienen eingegriffen. Der Schalthebel ist in diesen Stellungen mit einer der Schaltschienen beweglich gekoppelt.

Ein Schwenken des Schalthebels in der Schaltebene aus der Ruhestellung in die eine oder andere Richtung hat ein Verschieben der mit dem Schalthebel gekoppelten Schaltschiene zur Folge, da der Schaltfinger eine die Eingriffsnut begrenzende Flanke beaufschlagt. Einer der Schaltschiene zugeordneten Gänge wird durch das Verschieben der Schaltschiene eingelegt.

Der in DE 31 25 632 C1 beschriebene Schalthebel ist zu einem fahrzeugfesten Gehäuse mittels eines kardanisch ausgeführten Gelenkes schwenkbar aufgenommen. Dieses Gelenk bzw. diese Lageranordnung sieht eine kastenförmig ausgebildete Konsole vor. Die Konsole nimmt den Schalthebel auf und ist mittels des Schalthebels um eine quer zur Schwenkachse ausgerichtete Kippachse an dem zu fahrzeugfesten Gehäuse schwenkbar gelagert. Die Kippachse fluchtet mit der Mittenachse von wahlweise einem oder zwei Kippbolzen. Die Kippbolzen lagern die Konsole in der Wählebene, jedoch nicht in der Schaltebene, schwenkbar an dem Gehäuse. Der Schalthebel ist in der Wählebene, in der Konsole unbeweglich, mit der Konsole um die Kippachse schwenkbar. Bei einer Wählbewegung an dem Schaltfinger nimmt der um die Kippachse schwenkende Schalthebel die Konsole mit. Der Schaltfinger ist an der zum Schaltangriff (Schaltknauf) entgegengesetzten Seite der Kippachse am Schalthebel angeordnet und schwenkt mit dem Schalthebel in der Wählebene um die Kippachse.

Derartige Vorrichtungen sehen eine Einrichtung für eine spürbare Erhöhung der Schaltkraft an dem Schalthebel vor. Die Einrichtung ist der Gasse des Rückwärtsganges zugeordnet. Der Bediener wird mittels der am Schalthebel deutlich ansteigenden Schaltkraft beim Anwählen der Gasse des Rückwärtsganges informiert, dass er im Begriff ist, den Rückwärtsgang einzulegen. Die Orientierung des Bedieners über die Stellung des Schalthebels zu dem Getriebe ist damit erleichtert. Das mit der ansteigenden Wählkraft abgegebene Signal an den Bediener wird insbesondere genutzt, um den Bediener vor unbeabsichtigten Wechseln aus einer Gasse für die Vorwärtsgänge in die Gasse für den Rückwärtsgang zu warnen. Diese sogenannte Schlagsperre wirkt bei unbeabsichtigtem Wählen aber auch bei beabsichtigtem Wählen Gasse des Rückwärtsganges. Eine kurze sprungartig ansteigende Wählkraft am Hebel signalisiert den Wechsel. Die Wählkraft ist in dem Moment wesentlich höher als die Kräfte, die beim Wählen der Gassen der Vorwärtsgänge am Schaltknauf auftreten. Nach dem Überwinden der erhöhten Wählkraft sinkt die Betätigungskraft wieder auf ein normales Niveau.

Die Lageranordnung sieht weiterhin eine schwenkbare Lagerung des Schalthebels in der Schaltebene um eine Schwenkachse in der Konsole vor. Die Schwenkachse verläuft quer zur Kippachse. Die Schwenkachse ist gleichzeitig die Mittenachse von einem in der Konsole angeordneten Schwenkbolzen. Der Schalthebel ist um den Schwenkbolzen in der Schaltebene, jedoch nicht in der Wählebene, an der Konsole gelagert. Der Schaltfinger ist am entgegensetzten Ende des Schalthebels zu der Schwenkachse angeordnet sowie in der Schaltebene, jedoch nicht in der Wählebene, um die Schwenkachse schwenkbar in der Konsole gelagert. Die Schwenkachse und die Kippachse liegen sich kreuzend in einer gemeinsamen Ebene.

Diese an sich zufriedenstellende Lösung hat den Nachteil, dass aufgrund der in einer Ebene liegenden Schwenk- und Kippachse des Schalthebels der Abstimmung von Schaltkräften und Schaltwegen Grenzen gesetzt sind. Unter Schaltkräften sind die Kräfte zu verstehen, die am Kraftangriff durch den Bediener (Schaltknauf) am Schalthebel beim Wählen und Schalten spürbar sind. Der Schalthebel legt beim Wählen und Schalten an seinem Kraftangriff definierte Wege zurück. Damit legt auch jeder weitere Punkt an dem Hebel zwischen dem Kraftangriff und der Schwenk- bzw. Kippachse definierte durch seinen Abstand zu den Achsen vorgegebene Wege zurück. Der Weg, zumeist im Bogenmaß, ist von dem Abstand des Schaltknaufs zu den Achsen abhängig. Bei gleichem Schwenkwinkel des Schalthebels um die Kippachse oder Schwenkachse liegt jeder der Punkte, unabhängig davon ob er um die Kippachse oder die Schwenkachse geschwenkt ist, gleiche Wege zurück. Der Schalthebel ist häufig durch eine zwischen dem Kraftangriff und den Achsen gelegene Schaltkulisse geführt. Der Gestaltung von material- und platzsparenden Kulissen sind aufgrund der gleichen Wege des Schalthebels in der Kulisse bei Wähl- und Schaltbewegungen häufig Grenzen gesetzt. Die Schaltkräfte am Schaltknauf sind über das Hebelverhältnis des Schalthebels beeinflussbar. Das Hebelverhältnis ergibt sich aus dem Abstand vom Knauf zu den Achsen und aus dem Abstand von den Achsen zu dem Eingriff des Schaltfingers in die Eingriffsnut der Schaltschiene. Der Länge des in den Fahrgastraum ragenden Schalthebels sind bauraumbedingt in der Regel Grenzen gesetzt. Die Länge des Schaltfingers, ausgehend von den sich kreuzenden Achsen, ist von der Lage der sich dem Schalthebel anschließenden Elemente der inneren Schaltung abhängig.

Der schwenkende Schalthebel ist beim Wählen der Gasse und beim Schalten der Gänge durch Führungsbahnen, z. B. einer Kulisse, geführt. Die Schwenkbewegungen des Schalthebels in Wähl- und Schaltrichtung sind durch Anschläge begrenzt. Die Anschläge sichern ab, dass der Schaltfinger nach dem Abschluss des Wählens einer Gasse exakt in eine der Eingriffsnuten einer der Schaltschienen eingreift. Die den Schaltweg des Schaltfingers begrenzenden Anschläge sichern ab, dass die Schaltschiene exakt in ihre vorgegebene Position und nicht darüber hinaus verschoben wird.

Während eines Schaltvorganges ist nur ein Gangrad schaltbar. Sind zwei Gangräder einer Gasse zugeordnet, ist eines der Gangräder in der Gasse von vornherein nicht schaltbar oder mittels einer Sperreinrichtung in der Gasse gesperrt, während das andere geschaltet wird. Je nach der Ausführung der Schaltvorrichtung sind die weiteren zu der gewählten Gasse benachbarten Gassen gegen unbeabsichtigtes oder selbsttätiges Wählen gesperrt. Ein falsches Wählen bzw. Schalten ist auszuschließen. Die Gangräder in dem zu der gewählten Gasse benachbarten Gassen sind während des Schaltens eines Gangrades und bei eingelegtem Gang gegen unbeabsichtigtes oder selbsttätiges Schalten gesperrt. Der Rückwärtsgang ist in der Regel gegen ein unbeabsichtigtes Anwählen oder Schalten aus einer der Schaltstellungen bzw. Wählpositionen für das Schalten bzw. die Wahl der Vorwärtsgänge gesperrt.

### Zusammenfassung der Erfindung

Die Aufgabe der Erfindung ist es daher, eine Lageranordnung für einen in zwei Ebenen schwenkbaren Schalthebel einer Schalteinrichtung zu schaffen, die sich einfach herstellen lässt sowie mit der der Aufwand zur Montage einer die Schaltschienen betätigenden Schalteinrichtung reduziert ist.

Diese Aufgabe ist nach dem Gegenstand des kennzeichnenden Teils des Anspruchs 1 gelöst. Die Lageranordnung weist eine Vorrichtung zum Erhöhen von Schalt- oder Wählkräften auf. Die Vorrichtung ist zumindest aus einer zur Konsole festen Rampe und aus mindestens einer Ablaufrolle gebildet. Die Ablaufrolle ist mittels einer Feder gegen die Rampe vorgespannt. Die Rampe ist vorzugsweise aus einem gestanzten und ggf. spanlos bzw. spanabhebend nachgearbeiteten Blech gebildet. Das Blech ist mit der Konsole verschweißt. Alternativ dazu ist vorgesehen die Rampe an einer aus Blech gebildeten Konsole direkt ausgeformt. Bei Schwenkbewegungen des Schalthebels um die Kippachse schwenkt die Rampe mit der Konsole gegen die an dem Gehäuse abgestützte Ablaufrolle. Die Ablaufrolle rollt dabei auf der Rampe ab. Über die Kraft der Feder und die Kontur der Rampe sind die Kräfte beim Wählen einer Gasse der Vorwärtsgänge und auch beim Anwählen des Rückwärtsganges steuerbar. Die Rampe steigt über wenigstens einer quer von einer gedachten Ebene abgehenden gedachten Abszisse an. Die Ebene verläuft dabei mit der Kippachse und ist so ausgerichtet, dass sie rechtwinklig von der Schwenkachse durchdrungen ist. Die Rampe steigt über der Abszisse von der Ebene weg an. Die Ablaufrolle ist drehbar um eine zum Gehäuse ortsfeste Rotationsachse gelagert. Der um die Kippachse geschwenkte Schalthebel nimmt die Konsole mit der Rampe mit. Die Rampe bewegt sich gegen die Ablaufrolle. Die Ablaufrolle steigt dabei gegen die Kraft der Feder an der Rampe auf. Die Wählkraft wird erhöht.

Für die Ausrichtung der rechtwinklig zu der Abszisse stehenden und den Anstieg beschreibenden Ordinate sind alternative Ausgestaltungen vorgesehen. Eine Ausgestaltung sieht vor, dass die Ordinate parallel zu der Kippachse mit der Ebene verläuft. Die Rampe weist von der Konsole weg. Ihre mit der Ablaufrolle in Berührung kommende Kontur entfernt sich mit zunehmendem Anstieg von der Konsole. Die Ablaufrolle wird dabei in Richtung der Konsole gegen die Rampe vorgespannt.

Die Ablaufrolle ist bevorzugt drehbar an einem Hebel befestigt. Der Hebel ist um einen zu dem Gehäuse festen Drehpunkt schwenkbar angeordnet. Eine oder mehrere Federn greifen von dem Drehpunkt des Hebels entfernt an dem Hebel an. Der Hebel ist mittels der Feder über die Ablaufrolle gegen die Rampe vorgespannt. Die durch den Drehpunkt des Hebels verlaufende Drehachse, um die der Hebel schwenkt, und die Rotationsachse der Rolle sind quer zur Kippachse des Schalthebels ausgerichtet und verlaufen vorzugsweise parallel zu der Wand der Konsole. Eine gleichmäßige Kraftverteilung wird mit zwei Rampen an der Konsole erzielt. Auf jede der Rampen wirkt jeweils einer der vorher beschriebenen Hebel mit jeweils einer der Ablaufrollen. Die Hebel sind sich einander gegenüberliegend beidseitig der Konsole angeordnet. Die Hebel nehmen die Konsole mit den Rampen zwischen sich und sind gegeneinander mittels wenigstens einer Zugfeder verspannt. Die Zugfeder ist jeweils an einem dem Drehpunkt abgewandten freien Ende eines jeden der Hebel eingehängt. Eine gleichmäßige Kraftverteilung und ein Bewegungsausgleich zwischen den Hebeln ist abgesichert. Die Lagerung der Konsole in dem Gehäuse, im Gegensatz zu der einseitig mit einer Vorrichtung zum Erhöhen der Wählkraft, ist von unerwünschten Querkräften aus einseitiger Belastung frei.

Alternativ zu der vorgenannten Ausrichtung der Ordinate sieht eine Ausgestaltung der Vorrichtung vor, dass die den Verlauf der Kontur beschreibende Ordinate senkrecht zu der Kippachse ausgerichtet ist und gleichzeitig mit der Ebene verläuft. Die Ordinate verläuft vorzugsweise parallel zu einer der Wandungen der Konsole und schneidet die Kippachse. Die Rampe ist deshalb durch die Ablaufrolle entweder in Richtung der Kippachse des Schalthebels oder aus der Richtung der Kippachse des Schalthebels mittels der Ablaufrolle belastet. Die Ablaufrolle wiederum ist drehbar an einem Hebel befestigt. Der Hebel ist um einen zu dem gehäusefesten Drehpunkt schwenkbar. Wenigstens eine aber auch mehrere von dem Drehpunkt entfernt an dem Hebel angreifende Federn spannen den Hebel über die Ablaufrolle gegen die Rampe von der Kippachse wegweisend oder zu der Kippachse hinweisend vor. Die durch den Drehpunkt verlaufende Drehachse des Hebels und die Rotationsachse der Rolle sind parallel zu der Kippachse des Schalthebels ausgerichtet. Für diese Ausführungsvariante ist wiederum vorgesehen, dass an der Konsole zwei Rampen angeordnet sind. Die Rampen sind an zwei voneinander weg und nach außen weisenden Wandabschnitten der Konsole befestigt bzw. ausgebildet. Auf jede der Rampen wirkt jeweils einer der Hebel mit jeweils einer der Ablaufrollen. Jeder der Hebel ist mittels jeweils mindestens einer sich zu dem Gehäuse abstützenden Feder über eine der Ablaufrollen gegen die Rampe vorgespannt.

Für eine Lageranordnung eines Schalthebels an einem mehrgängigen Wechselgetriebe ist mit einer weiteren Ausgestaltung der Erfindung vorgesehen, dass die Rampe ausgehend von dem in der Ebene liegenden Koordinatenursprung des durch die Abszisse sowie Ordinate gebildete Koordinatensystems über einer ersten Abszisse sowie über eine entgegengesetzt zu der ersten Abszisse gerichteten zweiten Abszisse beidseitig von der Ebene weg ansteigt. Der in der Neutralstellung stehende Schalthebel steht senkrecht in der Konsole. Dabei verläuft die Mittenachse des Schalthebels mit der von der Kippachse ausgehenden Ebene. Die Rampe steigt beidseitig der Ebene von dem Koordinatenursprung ausgehend sowie von der Ebene weg an. Die in der Neutralstellung auf Höhe des Koordinatenursprungs an der Rampe anliegende Ablaufrolle ist mittels der absteigenden Flanken gegenüber dem Koordinatenursprung zentriert. Die auf den Hebel wirkende Federkraft zwingt die Ablaufrolle in diese Vertiefung an der Rampe und hält damit die Konsole in der Neutralstellung des Schalthebels mittels der Kraft der Feder arretiert. Der Verlauf der Rampe kann von einer Seite der Ebene zu der anderen Seite der Ebene spiegelbildlich gestaltet sein oder von einer Seite der Ebene zu der anderen Seite der Ebene unterschiedliche Anstiege aufweisen. Wählkräfte sind zusätzlich über die Anzahl, Federkennlinie und die Hebelverhältnisse an den Hebeln fein abstimmbar.

Einen wesentlichen Einfluss auf die Wählkraft an dem um die Kippachse schwenkenden Schalthebel hat der Anstieg der Rampe. Für das Anwählen der Gassen der Vorwärtsgänge in einem mehrgängigen Getriebe ist zunächst ein flacher Anstieg der Rampe zu beiden Seiten der Ebene vorgesehen. Auf diesem Teil der Rampe rollt die Ablaufrolle ab, wenn der Schalthebel die Kippachse wahlweise in die eine oder andere Schwenkrichtung zum Anwählen einer der Gassen der Vorwärtsgänge geschwenkt wird. Die Gegenkraft an dem Schalthebel nimmt mit zunehmenden Schwenkwinkel des Schalthebels nur geringfügig zu. Zur Wahl der Gasse des Rückwärtsganges wird der Schalthebel in eine Schwenkrichtung über seine Position zu einer Gasse mit Vorwärtsgängen hinaus in die Gasse des Rückwärtsganges geschwenkt. Die Konsole schwenkt mit dem Schalthebel dabei weiter mit und somit auch die Rampe. Der flach ansteigenden Rampe schließt sich ein Abschnitt an der Rampe an, der stark abgeknickt von der Abszisse weg ansteigt. Wenn der Schalthebel seine Position vor der Gasse des Rückwärtsganges erreicht, trifft die Rolle auf den Abschnitt an der Rampe mit dem steilen Anstieg. Der Hebel wird mittels der auf der steil ansteigenden Rampe aufsteigenden Ablaufrolle gegen die Kraft der Feder bewegt. Die Gegenkraft an der Konsole und somit an dem Schalthebel steigt sprungartig an. Dem Bediener wird mittels dieses Kraftanstieges an dem Schaltknauf signalisiert, dass er im Begriff ist in die Gasse des Rückwärtsganges einzuwählen.

Die Kippachse und die Schwenkachse verlaufen zueinander beabstandet. Die Konsole ist mittels des Schalthebels um eine quer zur Schwenkachse ausgerichtete Kippachse an einem zum Fahrzeug festen Gehäuse schwenkbar gelagert. Die Kippachse fluchtete mit der Mittelachse von wahlweise einem oder zwei Kippbolzen. Die Kippbolzen lagern die Konsole in der Wählebene, jedoch nicht in der Schaltebene, schwenkbar an dem Gehäuse. Der Schalthebel ist in der Wählebene, zur Konsole unbeweglich, mit der Konsole um die Kippachse schwenkbar. Bei einer Wählbewegung an dem Schaltfinger nimmt der um die Kippachse schwenkende Schalthebel die Konsole mit. Der Schaltfinger ist an einer zum Schaltangriff wegweisenden Seite, vorzugsweise an der entgegengesetzten Seite, der Kippachse am Schalthebel angeordnet und schwenkt mit dem Schalthebel in der Wählebene um die Kippachse.

In der Vorrichtung gemäß Erfindung stehen die Eingriffsnuten in der mittleren neutralen Stellung der Schaltschiene in die Wählrichtungen in einer Linie zueinander ausgerichtet. Der Schaltfinger kann in der Wählebene ungehindert durch die Eingriffsnuten hindurch schwenken, bis die Ruhestellung des Schalthebels erreicht ist und der Schalthebel in eine der Eingriffsnuten eingreift.

Die Lageranordnung sieht weiterhin die schwenkbare Lagerung des Schalthebels in der Schaltebene um eine Schwenkachse in der Konsole vor. Die Schwenkachse verläuft quer zur Kippachse. Die Schwenkachse fluchtet mit den Zentren von sich zwei in der Konsole gegenüberliegenden Lageraugen oder wahlweise mit einem in der Konsole ausgebildeten Lagerauge. Der Schalthebel ist dabei um einen in dem/den Lagerauge(n) gelagerten Schwenkbolzen in der Schaltebene, jedoch nicht in der Wählebene, schwenkbar an der Konsole gelagert. Der Schaltknauf und der Schaltfinger weisen jeweils in eine andere Richtung von der Schwenkachse weg. Bei den Schaltbewegungen ist der Schalthebel über den Schaltfinger mit einer der Eingriffsnuten einer Schaltschiene beweglich gekoppelt. Die Schaltbewegung bewirkt das Verschieben der Schaltschiene. Der Schaltfinger beaufschlagt dabei eine der in Verschieberichtung der Schaltschiene liegenden Flanke der Eingriffsnut. Einer der Schaltschiene zugeordneten Gänge wird durch das Verschieben der Schaltschiene eingelegt.

Die Schwenkachse und die Kippachse liegen erfindungsgemäß horizontal auf unterschiedlichen und vertikal, je nach Ausführung der Lageranordnung, in einer gemeinsamen oder in unterschiedlichen Ebenen. Die Schwenkachse und die Kippachse liegen dabei zwischen dem Kraftangriff am Schaltknauf und dem Schaltfinger. Schwenkbewegungen um die dem Schaltfinger am nächsten liegende der Achsen resultieren am Schaltknauf sowie an jedem der sich in Richtung dieser Achse an dem Schaltknauf anschließenden Punkte des Schalthebels in einem längeren zurückgelegten Weg im Bogenmaß, wenn die Schaltvorrichtung sowohl die Wähl- als auch die Schaltbewegungen auf einen gleichen Schwenkwinkel begrenzt. Es ist somit mit einer Ausgestaltung der Erfindung vorgesehen, dass die dem Schaltfinger am nächsten liegende Achse die Schwenkachse ist. Die Kippachse liegt weiter von dem Schaltfinger entfernt. Der Schaltknauf legt unter der Voraussetzung, dass der Schwenkbereich des Schalthebels in der Schaltvorrichtung auf gleiche Schwenkwinkel beim Wählen und Schalten begrenzt ist, beim Schalten der Gänge vergleichsweise zum Wählen längere Wege zurück. Alternativ ist vorgesehen, dass die Kippachse dem Schaltfinger im Vergleich zur Lage der Schwenkachse am nächsten liegt. Die Schwenkachse liegt weiter von dem Schaltfinger entfernt. Der Schaltfinger legt unter der vorgenannten Voraussetzung beim Wählen der Gassen vergleichsweise zum Schalten längere Wege zurück.

Mit einer Ausgestaltung der Erfindung ist vorgesehen, dass die Kippbolzen drehfest in dem Gehäuse aufgenommen sind. Die Konsole ist um die Kippbolzen schwenkbar. In jedem der Lageraugen der Konsole ist ein Gleitlager zwischen dem Kippbolzen und der Konsole angeordnet. Alternativ dazu sitzt der Kippbolzen ohne gesonderte Lagerung passgenau in dem Lagerauge der Konsole. Der Schalthebel ist entweder schwenkbar um den zur Konsole bewegungsfesten Schwenkbolzen gelagert oder der Schwenkbolzen sitzt fest in dem Schalthebel und bewegt sich in Lageraugen der Konsole. Alternativ sind die Lagerungen des Schalthebels auf dem Schwenkbolzen oder die Lagerungen des Schwenkbolzens in der Konsole mit Gleitlagern versehen.

Mit weiteren Ausgestaltungen der Erfindung ist vorgesehen, dass die den Schwenkwinkel des Schalthebels in Wähl- und Schaltrichtung begrenzenden Anschläge in der Lageranordnung integriert sind. Der Schwenkwinkel bei Schaltbewegungen des Schalthebels wird an der Konsole mittels wenigstens eines Langloches begrenzt, in das ein aus dem Schalthebel hervorstehender Anschlag eingreift. Das Langloch ist bogenförmig und sich in Schwenkrichtung des Schalthebels beim Schalten einer der Gänge erstreckend ausgebildet. Alternativ dazu weist der Schalthebel eine langlochartig ausgearbeitete Ausnehmung auf, in die ein an der Konsole ausgebildeter Anschlag eingreift. Der Anschlag ist zu der Schwenkachse beabstandet angeordnet und begrenzt in dem Langloch den Schwenkwinkel des um die Schwenkachse schwenkenden Schalthebels. Die Konsole weist alternativ ein weiteres Langloch auf, wobei das Langloch sich bogenförmig in Schwenkrichtung des um die Kippachse schwenkbaren Schalthebels erstreckt. In das Langloch greift ein aus dem Gehäuse hervorstehender Anschlag ein. Alternativ dazu ist das Gehäuse mit einem derartigen Langloch versehen, in das ein aus der Konsole hervorstehender Anschlag eingreift. Der Anschlag ist zu der Kippachse beabstandet angeordnet und begrenzt in dem Langloch den Schwenkwinkel des um die Kippachse schwenkenden Schalthebels bzw. der mit dem Schalthebel um die Kippachse schwenkenden Konsole.

Mit einer weiteren Ausgestaltung der Erfindung ist eine in der Lageranordnung integrierte Rasteinrichtung vorgesehen. Die Rasteinrichtung verrastet den Schalthebel in der Ruhe- bzw. Neutralstellung sowie wahlweise in einer der geschalteten Stellungen. In der Lageranordnung ist eine Rastkontur mit wenigstens einer ersten Rastvertiefung und einer zweiten Rastvertiefung an dem Schalthebel vorgesehen. Ein Rastelement ist gegen die Rastkontur vorgespannt. Das Rastelement stützt sich an der Konsole ab. Bei Schwenkbewegungen des Schalthebels um die Kippachse greift das Rastelement in die erste der Rastvertiefungen ein. In dieser Position verbleibt das Rastelement, bis der Wählvorgang abgeschlossen ist. Bei Schaltbewegungen des Schalthebels bewegt sich die Rastkontur an dem Rastelement solange entlang, bis das Rastelement in der zweiten Rastausnehmung verrastet ist. In dieser Position ist der eine Gang eingelegt. Die Rasteinrichtung arretiert den Schalthebel dabei in eine dem Gang zugeordneten geschalteten Position.

Die Rastkontur ist an dem Schalthebel bewegungsfest angeordnet und das Rastelement an der Konsole geführt. Alternativ dazu ist das Rastelement an dem Schalthebel geführt und stützt sich an diesem ab. In diesem Fall ist die Rastkontur an der Konsole ausgebildet. Es ist weiterhin vorgesehen, dass das Rastelement eine Rolle an einem Kipphebel ist. Der Kipphebel ist an einem zu der Konsole festen Kipppunkt schwenkbar an der Konsole befestigt. Eine sich an der Konsole abstützende sowie von dem Kipppunkt entfernt an dem Kipphebel angreifende Feder spannt die Rolle gegen die Rastkontur vor. Die Kippachse des Kipphebels an dem Kipppunkt und die Rotationsachse der Rolle verlaufen parallel zur Schwenkachse des Schalthebels. Bei Bewegungen der Rastkontur gegen die Rolle rollt die Rolle auf der Rastkontur von einer Rastvertiefung in die andere Rastvertiefung ab.

Eine Ausgestaltung der Rasteinrichtung sieht vor, dass der Kipphebel an einem aus der Konsole hervorstehenden Vorsprung kippbar befestigt ist. Der Vorsprung ist von der Rolle wegweisend an der Konsole befestigt oder ausgebildet. Der Kipphebel ist aus Blech gebildet und mittels eines Bolzens an dem Vorsprung um den Kipppunkt schwenkbar gelagert. An einem Ende des Kipphebels, das nicht die Rolle trägt, weist der Kipphebel ein hakenförmiges Ende auf. Das hakenförmige Ende hintergreift den Vorsprung an einer von dem Kipphebel abgewandten Seite zumindest teilweise. Mit dem hakenförmigen Ende ist der Kipphebel auf dem Bolzen axial, d. h. im Richtungssinn der Schwenkachse des Schalthebels, gesichert. Außerdem sieht eine Ausgestaltung der Rasteinrichtung vor, dass der Kipphebel aus Blech gebildet ist und dass die Rolle mittels eines Bolzens an dem Kipphebel um die Rotationsachse beweglich gelagert ist. Der Kipphebel weist auf Höhe der Rolle ein weiteres hakenförmiges Ende auf. Mit dem hakenförmigen Ende hintergreift der Kipphebel die Rolle an einer von dem Kipphebel abgewandten Seite zumindest teilweise. Die Rolle ist dabei axial, d. h. im Richtungssinn der Schwenkachse des Schalthebels, auf dem Bolzen gesichert. Die Rolle ist mittels einer den Kipphebel in Richtung der Schwenkachse ziehenden Zugfeder gegen die Rastkontur vorgespannt. Alternativ dazu ist vorgesehen, dass der Kipphebel mit einer sich an der Konsole abstützenden Druckfeder belastet ist. Die Zugfeder ist in einer Hülse zu der Konsole geführt und mit einem ihrer Federenden an der Konsole eingehängt. Das andere Ende greift an dem Kipphebel an. Die Rastkontur ist bevorzugt an einem von dem Schalthebel abstehenden Blech ausgebildet. In das Blech ist die Rastkontur mit den Rastvertiefungen eingeformt. Das Blech ist auf geeignete Weise, z. B. durch Schweißen oder durch eine durch über den Schalthebel gezogene Hülse, an dem Schalthebel befestigt. Das Blech durchgreift eine Öffnung in einer Wand der Konsole. Die Rastkontur ist dabei an dem Ende des Bleches ausgebildet und liegt außerhalb der Wand der Konsole. Die Rolle ist außenseitig der Konsole angeordnet und mit den quer zur Schwenkachse des Schalthebels hintereinander ausgerichteten und sich aneinander anschließenden Rastvertiefungen versehen.

Mit einer weiteren Ausgestaltung der Erfindung ist eine Sperreinrichtung an der Lageranordnung des Schalthebels vorgesehen. Mindestens zwei jedoch zumeist drei oder vier Schaltschienen liegen nebeneinander im Schwenkbereich des Schaltfingers. In den in der Wählebene liegenden Ruhestellung sowie der Neutralstellung des Schalthebels stehen die Schaltschienen in einer mittleren neutralen Stellung. Die mittels der Schaltschiene, durch Längsverschieben der Schaltschienen, schaltbaren Gänge sind nicht geschaltet. Jede der Schaltschienen weist eine Eingriffsnut bzw. ein Schaltmaul für den Eingriff des Schaltfingers auf. Durch Wählbewegungen des Schalthebels in eine der Gassen, greift der Schaltfinger in eine der Schaltschienen ein. Eine gelenkige Verbindung zwischen der Schaltschiene und dem Schalthebel ist vorgenommen.

In der sich der Wählbewegung anschließenden Schaltbewegung, bei der der Schalthebel um die Schwenkachse schwenkt, wird die mit dem Schalthebel in Verbindung stehende Schaltschiene längs verschoben und einer der Gänge eingelegt. Während der Schaltbewegung des Schalthebels sind die anderen nicht mit dem Schalthebel im Eingriff stehenden Schaltschienen gegen Längsbewegungen zu sperren. Die Schaltschienen sind mittels der Lageranordnung nach dem Abschluss des Wählvorganges gesperrt. Dazu ist an der Konsole mindestens ein Sperrfinger ausgebildet. Dieser Sperrfinger greift dabei in einen an der Schaltschiene ausgebildeten Schlitz ein und setzt die Schaltschiene längs fest. Jede der Schaltschienen weist einen der Schlitze auf. Der Schlitz ist in Richtung des Sperrfingers sowie in Richtung des um die Kippachse schwenkenden Schalthebels offen. In der mittleren neutralen Stellung der Schaltschienen sind die Schaltschienen bzw. die Schlitze der Schaltschienen so zueinander ausgerichtet, dass die Schlitze in der Schwenkrichtung des Sperrfingers hintereinander liegen und zueinander ausgerichtet sind.

Der Sperrfinger schwenkt bei Wählbewegungen am Schalthebel mit der um die Kippachse schwenkenden Konsole und kann sich in seiner Schwenkrichtung durch die einander benachbart liegenden Schlitze frei hindurchbewegen, bis der Schaltfinger in eine der gewählten längsbeweglichen Schaltschienen sowie der Sperrfinger in den Schlitz oder die Schlitze einer festzusetzenden Schaltschiene formschlüssig eingreift. Die durch den Schaltfinger beaufschlagte Schaltschiene ist dabei von dem Sperrfinger nicht gesperrt und ist in Längsrichtung mittels des Schaltfingers frei beweglich. Bei Schwenkbewegungen des Schalthebels um die Schwenkachse zum Schalten von Gängen verbleibt der Sperrfinger in den Schlitzen der gesperrten Schaltschienen und hält diese während der Schaltvorgänge und während des Fahrbetriebes mit eingelegtem Gang in ihrer gesperrten Position.

Eine Ausgestaltung der Erfindung sieht vor, dass dem Schaltfinger zumindest drei der Schaltschienen zugeordnet sind. Der Sperrfinger greift in zwei der Schaltschienen gleichzeitig ein. Der Schaltfinger ist mit der zu schaltenden Schaltschiene formschlüssig verbunden. Steht der Schaltfinger nach dem Abschluss des Wählvorganges in einer Gasse, die einer zwischen zwei zu sperrenden Schaltschienen angeordneten Schaltschiene zugeordnet ist, sperrt der Sperrfinger die benachbarten Schaltschienen gleichzeitig. Eine Freimachung an dem Sperrfinger sichert ab, dass die gewählte Schaltschiene von dem Sperrfinger unberührt längs freibeweglich mittels des Schaltfingers schwenkbar ist. Die Freimachung steht über dem Schlitz der längs freibeweglichen Schaltschiene. Der Sperrfinger greift an dieser Schaltschiene somit nicht in den Schlitz ein. Die mit dem Schaltfinger bewegliche Schaltschiene durchdringt die Freimachung an dem Sperrfinger zu dem Sperrfinger somit berührungslos. Der Sperrfinger ist in seiner einfachsten Form ein flaches Blechteil. Das Blechteil steht entweder in einer gedachten von der Kippachse des Schalthebels senkrecht durchdrungenen Ebene einteilig mit der Wandung aus der Wandung der Konsole hervor oder ist an dieser gesondert befestigt. Der Sperrfinger ist in dieser Ebene dabei so breit, dass in jeder geschwenkten Position des Sperrfingers jede der zu sperrenden Schaltschienen mittels des Sperrfingers beaufschlagbar ist.

Die Lageranordnung für den Schalthebel gemäß Erfindung weist mit der Vorrichtung zum Erhöhen der Wählkraft, der Rastiereinrichtung und der Sperreinrichtung Elemente auf, die üblicherweise von einer Lageranordnung des Schalthebels getrennt in dem Getriebe angeordnet sind. Es ist mit der Erfindung eine raumsparende sowie einfach herzustellende Schalteinrichtung geschaffen. Die Lageranordnung des Schalthebels ist als Modul vormontierbar, wobei die Konsole des Schalthebels vorwiegend die Basis für die Befestigung weiterer Elemente des Schaltgetriebes ist.

### Kurze Beschreibung der Zeichnungen

Die Erfindung wird nachfolgend anhand von Ausführungsbeispielen näher erläutert. Es zeigen:
Figuren 1 bis 9 ein Ausführungsbeispiel einer Lageranordnung gemäß Erfindung in verschiedenen Ansichten und Schnittdarstellungen. Im Einzelnen zeigt:
   - Figur 1: eine Gesamtansicht der Lageranordnung,
   - Figur 2: einen Längsschnitt durch die Lageranordnung,
   - Figur 2a: das Schaltschema der Stellungen des Schalthebels,
   - Figur 3: einen Querschnitt der Lageranordnung,
   - Figur 4: eine schematische Darstellung der Lage der Kippachse und der Schwenkachse zu dem Schalthebel,
   - Figur 5: einen Längsschnitt durch die Lageranordnung mit dem um die Kippachse in eine Wählrichtung geschwenkten Schalthebel,
   - Figur 6: einen Querschnitt durch die Vorrichtung mit dem um die Schwenkachse in eine Schaltstellung geschwenkten Schalthebel,
   - Figur 7: eine Gesamtansicht der Lageranordnung ohne das Gehäuse,
   - Figur 8a: eine Ansicht der Lageranordnung von unten in der Neutralstellung des Schalthebels,
   - Figur 8b: eine Ansicht der Lageranordnung von unten mit dem in die Gasse des Rückwärtsganges geschwenkten Schalthebel und
   - Figur 9: eine Seitenansicht der Lageranordnung mit dem Sperrfinger und
   - Figur 10: ein weiteres Ausführungsbeispiel einer erfindungsgemäßen Lageranordnung ohne Gehäuse.

### Detaillierte Beschreibung der Zeichnungen

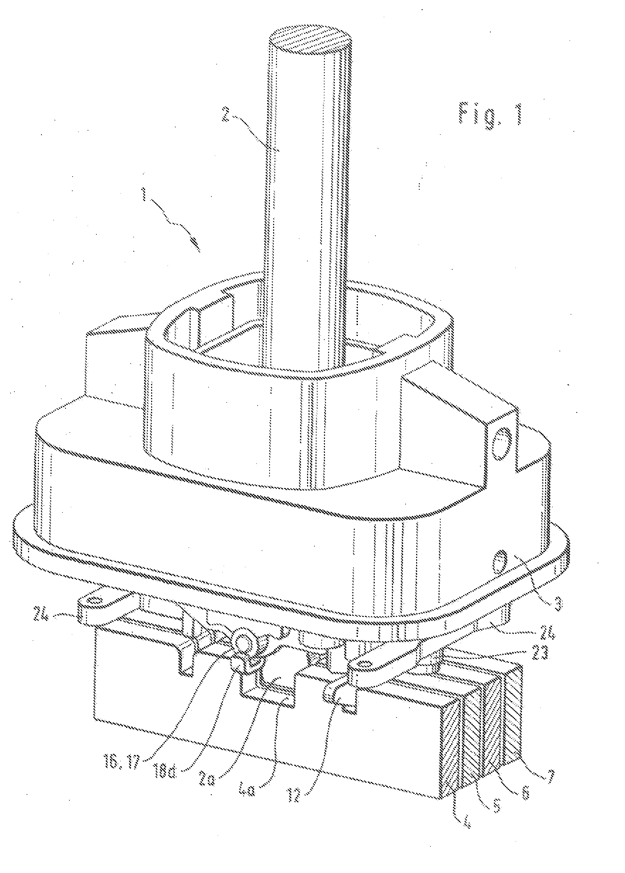

Figur 1 zeigt eine Gesamtansicht eines Ausführungsbeispieles einer Lageranordnung 1. In der Lageranordnung 1 ist ein Schalthebel 2 gelagert. Die Lageranordnung 1 ist in einem Gehäuse 3 aufgenommen. Der Schalthebel 2 wirkt mit einem Schaltfinger 2a wahlweise auf Schaltschienen 4, 5, 6 und 7. Die Schaltschienen 4, 5, 6 und 7 sind jeweils mit einer Eingriffsnut 4a, 5a, 6a, 7a versehen, in die der Schalthebel 2 in Abhängigkeit von seiner Wählposition eingreift.

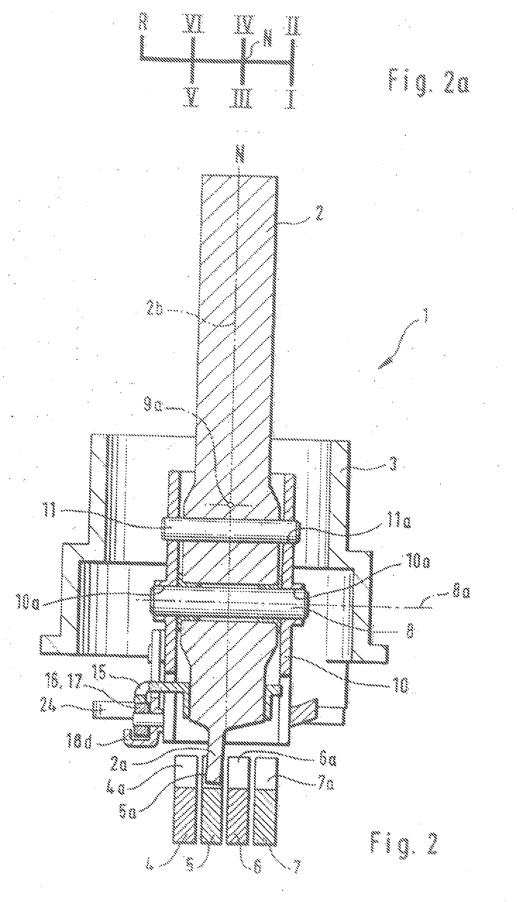

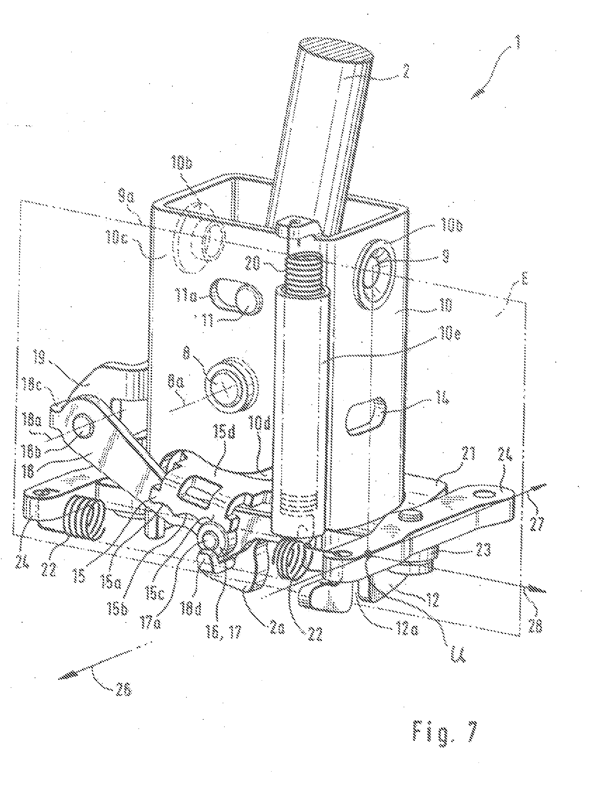

In Figur 2 ist die Lageranordnung 1 geschnitten dargestellt. Der Schalthebel 2 steht in der Neutralstellung N. Der Schaltfinger 2a verläuft leicht zu der in der Neutralstellung stehenden Mittelachse 2b des Schalthebels 2 abgewinkelt und greift in die Eingriffsnut 5a der Schaltschiene 5 ein. Die Schaltschienen 4, 5, 6 und 7 stehen in einer neutralen Mittelstellung. In dieser neutralen Mittelstellung sind die Eingriffsnuten 4a, 5a, 6a und 7a in Schwenkrichtung des Schalthebels 2 hintereinander sowie zueinander ausgerichtet. Der Schalthebel 2 ist aus der neutralen Stellung N um die senkrecht zu der Darstellung verlaufende Kippachse 9a schwenkbar in der Lageranordnung 1 angeordnet. Der Schaltfinger 2a ist beim Schwenken des Schalthebels 2 um die Kippachse 9a innerhalb der Eingriffsnuten 4a, 5, 6a und 7a frei beweglich schwenkbar. Der Schalthebel 2 ist in einer Konsole 10 auf einem Schwenkbolzen 8 um die Schwenkachse 8a schwenkbar gelagert. Der Schwenkbolzen 8 sitzt fest in Lageraugen 10a der Konsole 10. In dem Schalthebel 2 ist weiterhin ein Anschlag 11 in Form eines Stiftes befestigt. Mit dem Anschlag 11 wird der Schwenkwinkel des Schalthebels 2 um die Schwenkachse 8a in einem sich in Schwenkrichtung erstreckendem Langloch 11a begrenzt (siehe auch Figur 7).

Aus der neutralen Stellung N ist der Schalthebel 2 um die Schwenkachse 8a mit dem Schaltfinger 2a schwenkbar. Der Schaltfinger 2a beaufschlagt dabei eine in Schwenkrichtung liegende Flanke der Eingriffsnut 5a. Die Schaltschiene 5 ist einer Gasse zugeordnet, aus der der dritte und vierte Gang durch Schwenken des Schalthebels 2 schaltbar sind. Figur 2a zeigt das Schaltschema zu den Wähl- oder Schaltstellungen des Schaltknaufes 2c. Aus der Gasse III-IV ist der Schalthebel 2 um die Kippachse 9a in Richtung der Gasse I-II schwenkbar. In der Gasse I-II greift der Schaltfinger 2a in die Schaltschiene 4 ein. Mit der Schaltschiene 4 ist der erste oder zweite Gang mittels des um die Schwenkachse 8a schwenkenden Schalthebels 2 schaltbar. Der um die Kippachse 9a in die Gasse VI-V geschwenkte Schaltfinger 2a greift in die Schaltschiene 6 ein. Mit einem Schwenken des Schalthebels 2 um die Schwenkachse 8a ist wahlweise der vierte oder fünfte Gang schaltbar. Bei einer Schwenkbewegung des Schalthebels um die Kippachse 9a über die Gasse VI-V hinaus wird die Gasse des Rückwärtsganges R angewählt. Der Schaltfinger 2a greift dabei in die Eingriffsnut 7a der Schaltschiene 7 ein. Durch Schwenken des Schalthebels 2 um die Schwenkachse 8a ist der Rückwärtsgang aus dieser Position schaltbar.

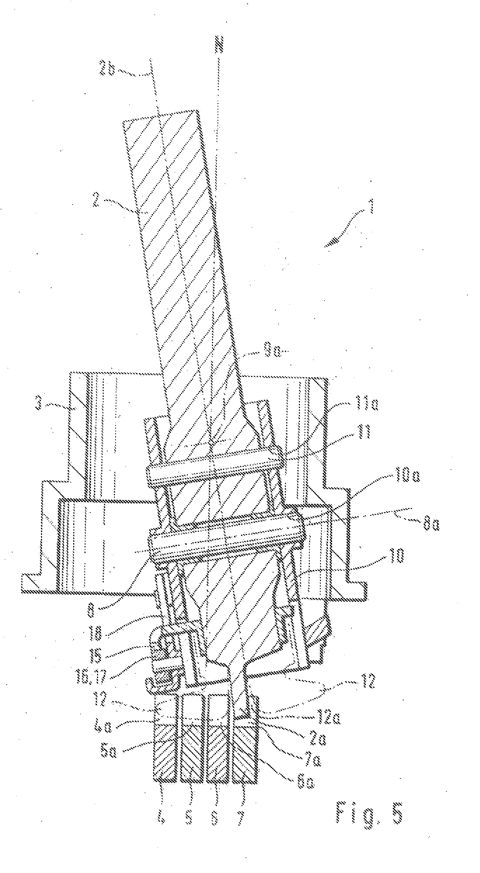

In Figur 5 zeigt den gleichen Schnitt wie in Figur 2. Der Schalthebel 2 ist jedoch durch Schwenken um die Kippachse 9a in die Gasse des Rückwärtsganges R bewegt. Der Schaltfinger 2a greift dazu in die Eingriffsnut 7a der Schaltschiene 7 ein. Aus dieser Position ist der Schalthebel 2 um die Schwenkachse 8a schwenkbar. Der mit dem Schalthebel 2 schwenkende Schaltfinger 2a nimmt dabei die Schaltschiene 7 in ihrer Längsrichtung mit, bis der Rückwärtsgang R eingelegt ist.

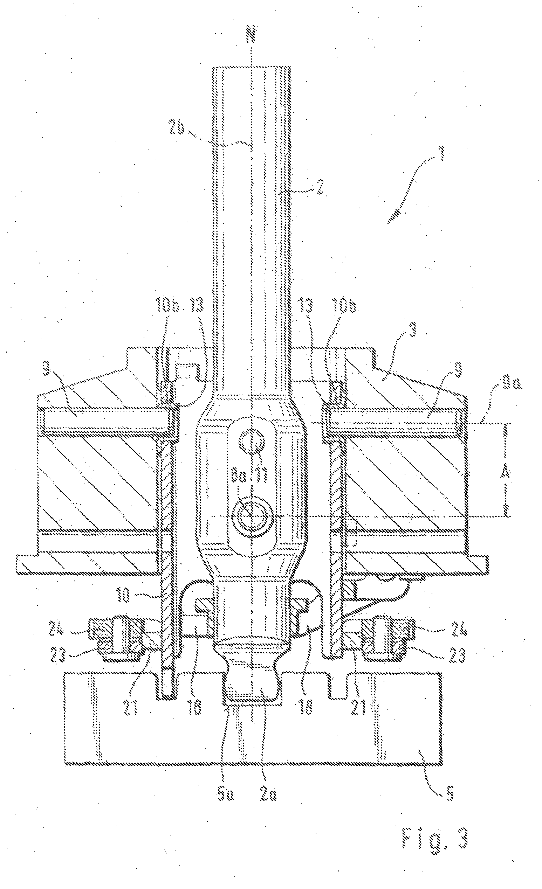

Figur 3 zeigt einen Querschnitt der Lageranordnung 1. Der Schalthebel 2 steht in der Neutralstellung und greift mit seinem Schaltfinger 2a in die Schaltschiene 5 ein. In dieser Ansicht ist die Schaltschiene 4 durch die Schaltschiene 5 verdeckt. Der Schaltfinger ist über den Eingriff in die Eingriffsnut 5a formschlüssig mit der Schaltschiene 5 gekoppelt. Aus der Neutralstellung ist der Schalthebel 2 um die Kippachse 9a und die Schwenkachse 8a schwenkbar. Die Kippachse 9a ist die Mittellinie von zwei Kippbolzen 9. Die Kippbolzen 9 sind in dem Gehäuse 3 fest angeordnet und greifen jeweils in ein Lagerauge 10b der Konsole 10. Die Konsole 10 ist durch den Schalthebel 2 mittels Gleitlagern 13 in dem Lagerauge 10b auf dem Kippbolzen 9 gelagert. Die Schwenkachse 8a und die Kippachse 9a verlaufen mit dem Abstand A zueinander beabstandet sowie quer zueinander. Dabei liegt die Schwenkachse 8a dem Schaltfinger 2a am nächsten.

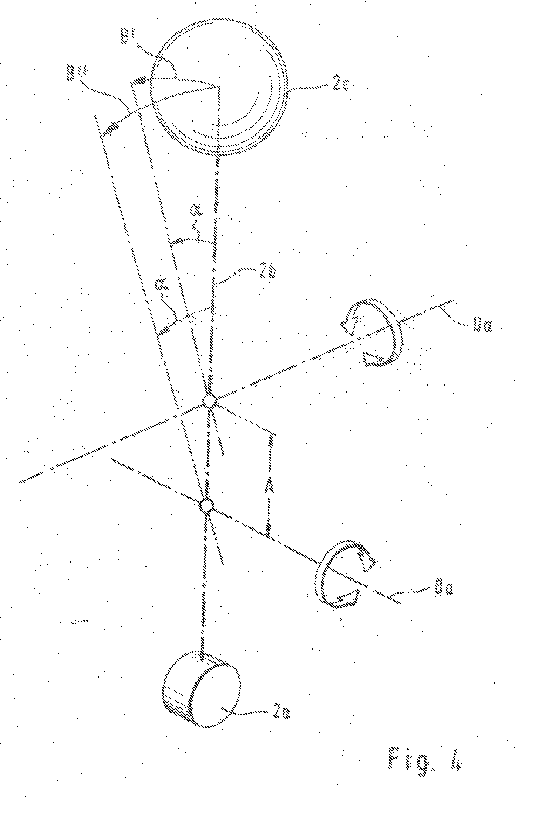

Figur 4, eine schematischen Darstellung des Schalthebels 2 mit den Achsen 8a, 9a zeigt, dass mittels der zueinander um den Abstand A beabstandeten Achsen 8a, 9a unterschiedliche Wähl- und Schaltwege am Schaltknauf 2c des Schalthebels erzielt werden. Der Schaltknauf 2c legt bei einem um die Kippachse 9a mit dem Schwenkwinkel α geschwenkten Schalthebel 2 den Weg B' im Bogenmaß zurück. Wenn der Schalthebel 2 um die Schwenkachse 8a mit dem gleichen Winkel α geschwenkt wird, legt der Schaltknauf 2c den Weg B" im Bogenmaß zurück. B" ist aufgrund des Abstandes A zwischen der Achse 8a und der Achse 9a größer als B'.

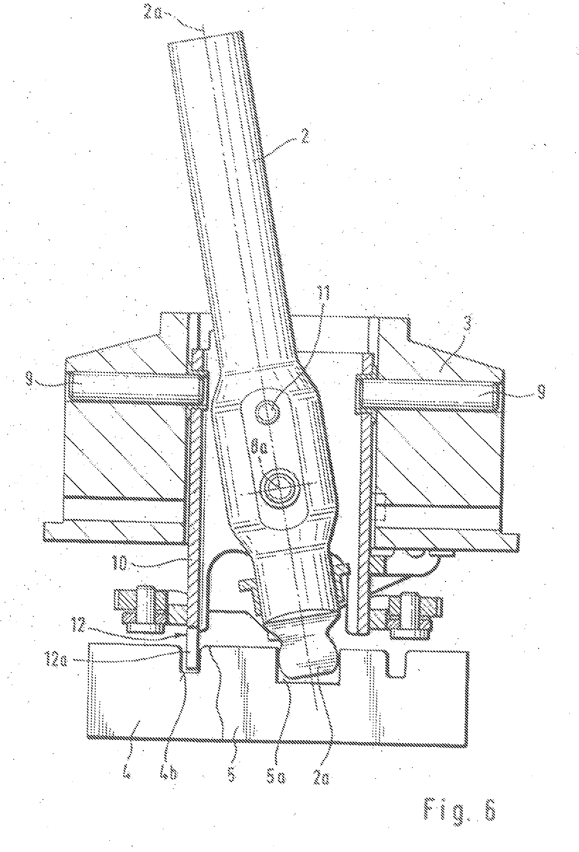

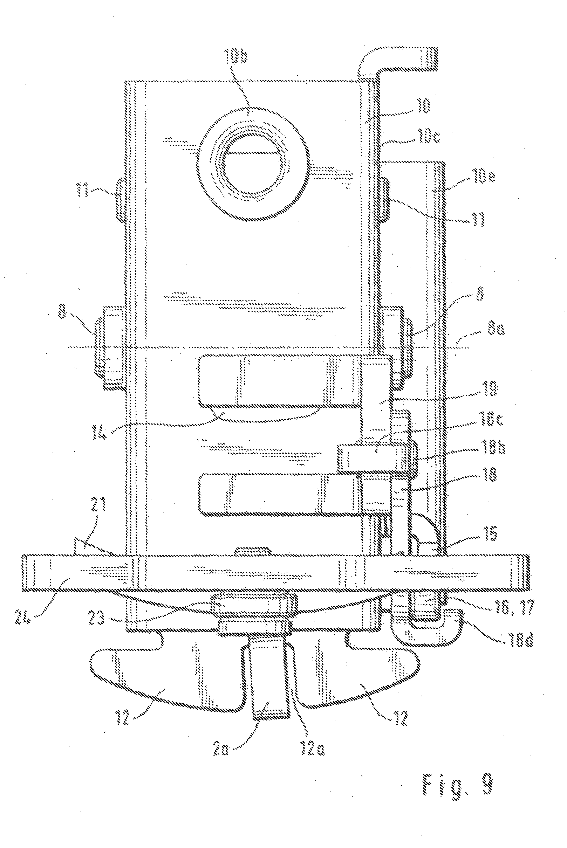

Figur 6 zeigt die Lageranordnung 1 in der gleichen Schnittdarstellung wie in Figur 3. Der Schalthebel 2a ist um die Schwenkachse 8a in eine Schaltstellung geschwenkt und hat dabei mittels des Schaltfingers 2a die Schaltschiene 5 in ihre Längsrichtung verschoben. Die Schaltschiene 4 verbleibt dabei unverändert in ihrer Position. In dieser Position ist die Schaltschiene 4 mittels eines Sperrfingers 12 an der Konsole 10 festgesetzt. Der Sperrfinger 12 greift dazu in einen Schlitz 4b an der Schaltschiene 4. In Figur 5 ist der Sperrfinger 12 in einer Vorderansicht zumindest teilweise dargestellt. Der Sperrfinger 12 ist mittels einer Freimachung 12a geteilt. Durch die Freimachung 12a ist die Schaltschiene 5 in der nach Figur 6 dargestellten Anordnung berührungslos zu dem Sperrfinger 12 hindurch verschiebbar. Wie aus der Ansicht in Figur 5 ersichtlich ist, schwenkt der Sperrfinger 12 mit dem Schaltfinger um die Kippachse 9a, wenn mit dem Schalthebel 2 eine der Gassen gewählt wird. In Figur 5 gibt der Sperrfinger 12 mittels der Freimachung 12a die Schaltschiene 7 für das Schalten des Rückwärtsganges und in Figur 6 die Schaltschiene 5 für das Schalten eines der Schaltschiene 5 zugeordneten Gänge frei. Figur 9 zeigt die Konsole 10 mit dem Sperrfinger 12 ohne die Schaltschienen. Der Schaltfinger 2a ist in Richtung der Freimachung 12a um die Schwenkachse 8a schwenkbar, so dass jede der mit dem Schaltfinger 2a im Eingriff stehende Schaltschiene zu dem Sperrfinger 12 berührungslos durch die Freimachung 12a verschiebbar ist.

Figur 7 zeigt die Lageranordnung 1 ohne das Gehäuse 3. Die Konsole 10 ist aus einem Profil gefertigt bzw. aus einem Blech zu einem Profil gebogen. In die Konsole sind Langlöcher 11a und 14 eingebracht. In das Langloch 11a greift, wie anfangs schon beschrieben, der Anschlag 11 ein. Der Anschlag 11 geht von dem Schalthebel 2 aus. Mittels des Anschlages 11 in dem Langloch 11a ist der Schwenkwinkel des Schalthebels 2 um den Schenkbolzen 8 in der Konsole 10 begrenzt. Der Anschlag 11 liegt an jeweils einem Ende des Langloches 11a an, wenn ein Gang geschaltet ist. In das Langloch 14 greift ein von dem Gehäuse 3 ausgehender und nicht dargestellter Anschlag ein. Mittels des Anschlages in dem Langloch 14 ist die Schwenkbewegung der Konsole 10 zu dem Gehäuse um den Kippbolzen 9 begrenzt.

Die Lageranordnung 1 weist eine Rastkontur 15 mit Rastvertiefungen 15a, 15b und 15c auf. Die Rastkontur 15 ist aus Blech ausgeformt. Das Blech ist winkelförmig abgebogen und mittels einer von der Rastkontur 15 abgehenden Verlängerung 15d an dem Schalthebel 2 befestigt. Die Verlängerung 15d durchgreift dabei eine von der Schwenkachse 8a des Schalthebels 2 durchdrungene Wand 10c der Konsole 10 an einer Öffnung 10d der Wand. Gegen die Rastkontur 15 ist ein Rastelement 16 vorgespannt. Das Rastelement 16 ist eine Rolle 17. Die Rolle 17 sitzt drehbar auf einem Bolzen 17a. Der Bolzen 17a ist an einem Kipphebel 18 befestigt. Der Kipphebel 18 ist um den Kipppunkt 18a auf einem Bolzen 18b schwenkbar befestigt. Der Bolzen 18b ist an einem mit der Kippachse 9a gleichgerichteten und von der Rotationsachse der Rolle 17 wegweisenden Vorsprung 19 befestigt. Der Kipphebel 18 ist aus Blech gebildet und weist ein hakenförmiges Ende 18c auf. Das hakenförmige Ende 18c hintergreift den Vorsprung 19 an einer von dem Kipphebel 18 abgewandten Seite. Damit ist der Kipphebel 18 auf dem Bolzen 18b axial an dem Vorsprung 19 gesichert. Die um ihre Rotationsachse an dem Kipphebel 18 beweglich gelagerte Rolle 17 ist mittels eines weiteren hakenförmigen Endes 18d an dem Kipphebel 18 gesichert. Dabei hintergreift das hakenförmige Ende 18d die Rolle 17 an einer von dem Kipphebel 18 abgewandten Seite.

Der Kipphebel 18 ist an einem dem Kipppunkt 18a abgewandten Ende mit einer Feder 20 belastet. Die Feder 20 ist eine Zugfeder und ist mir ihrem einen Ende an dem Kipphebel 18 sowie mit dem anderen Ende an der Konsole 10 eingehängt. Die Feder 20 zieht den Kipphebel 18 mit der Rolle 17 gegen die Rastkontur 15 und ist dabei in einer Hülse 10e an der Konsole 10 geführt. Der Schalthebel 2 steht in Figur 7, um die Schwenkachse 8a geschwenkt, in einer geschalteten Stellung. Der Anschlag 11 liegt an einem Ende des Langloches 11a an. In dieser Stellung ist die Rolle 17 in der Rastvertiefung 15c eingerastet und arretiert den Schalthebel 2 in seiner Stellung. Wird der Schalthebel 2 gegensinnig zu seiner jetzigen Schwenkstellung um die Schwenkachse 8a geschwenkt, steigt die Rolle 17 aus der Rastvertiefung 15c auf und verrastet zunächst in der Rastvertiefung 15b. In dieser Stellung steht der Schalthebel 2 entweder in der Neutralstellung oder in einer der Ruhestellungen der Gassen vor dem Schalten eines Ganges. Wird der Rasthebel 2 in diese Richtung weiter geschwenkt, verrastet die Rolle 17 schließlich in der Rastvertiefung 15a und arretiert den Schalthebel 2 in einer weiteren Schaltstellung.

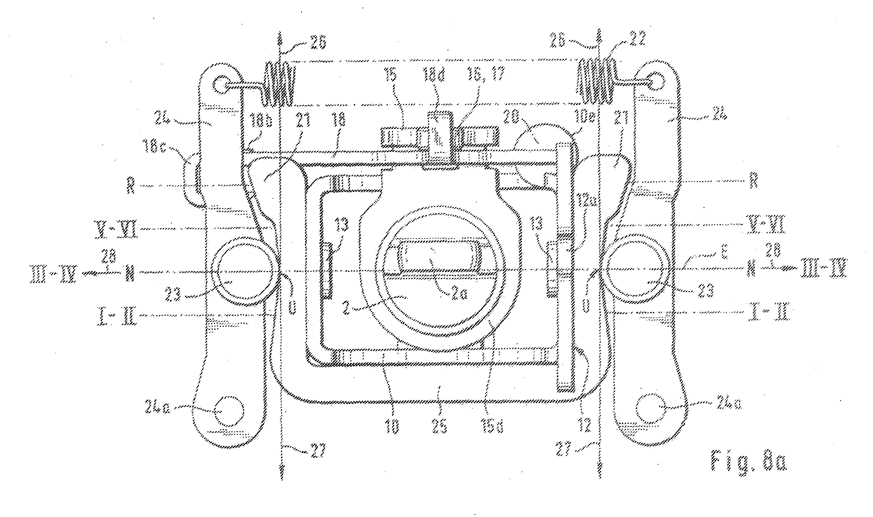

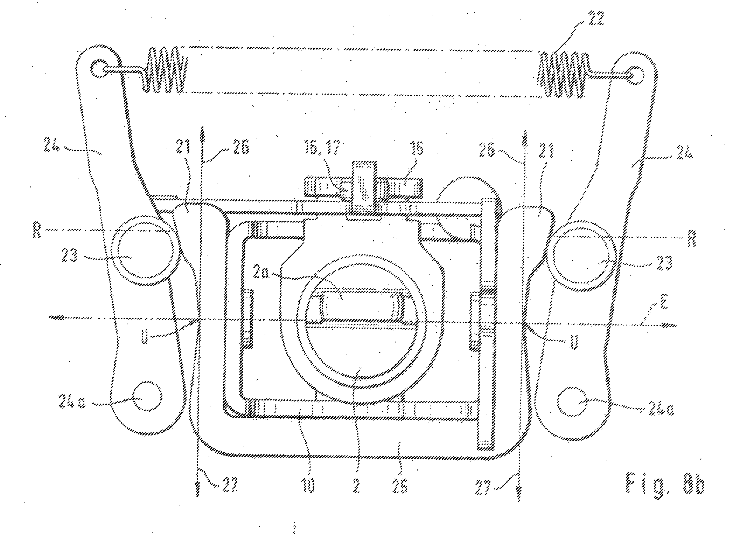

Die Lageranordnung 1 weist eine Vorrichtung zum Erhöhen von Wählkräften auf. Wie aus den Figuren 8a und 8b zu entnehmen ist, ist die Vorrichtung aus zwei Rampen 21, jeweils einer gegen die Rampe 21 mittels einer Feder 22 vorgespannten Ablaufrolle 23 sowie zwei Hebeln 24 gebildet. Die Rampen 21 sind an einem bügelförmigen Blech 25 ausgebildet. Das Blech 25 ist an der Konsole 10 befestigt. Die Hebel 24 sind jeweils um einen zum nicht dargestellten Gehäuse festen Drehpunkt 24a in Richtung der Konsole 10 schwenkbar angeordnet. Jede der Ablaufrollen 23 ist drehbar an einem der Hebel 24 angeordnet. Die Zugfeder 22 ist jeweils mit einem ihrer Enden an einem zu dem Drehpunkt 24a entgegengesetzten Ende des Hebels 24 eingehakt. Die Hebel 24 sind mittels der Zugfeder gegeneinander und somit gegen die Konsole 10 vorgespannt. Dabei wird jeweils eine der Rollen 23 über die Hebel 24 gegen jeweils eine der Rampen 21 gezogen.

Die Rampen 21 sind in Abschnitte unterschiedlichen Anstieges eingeteilt und weisen zueinander die gleiche Rampenkontur auf. Die Kontur einer jeden Rampe 21 steigt über zwei in entgegengesetzte Richtung weisenden Abszissen 26, 27 von einem Koordinatenursprung U ausgehend an. Die Abszissen 26 und 27 gehen quer von einer gedachten Ebene E ab und sind somit parallel zur Schwenkachse 8a des Schalthebels 2 ausgerichtet (Figur 7, Figur 8a, Figur 8b). Die Ebene E verläuft mit der Kippachse 9a des Schalthebels 2 und ist rechtwinklig von der Schwenkachse 8a des Schalthebels 2 durchdrungen. Der Koordinatenursprung U liegt in der Ebene E. Ein um die Kippachse 9a geschwenkter Schalthebel 2 schwenkt die Konsole 10 mit der Rampe 21 gegen die in Schwenkrichtung feste Ablaufrolle 23. Die Kontur der Rampen 21 bewegt sich in Schwenkrichtung zu der Rotationsachse der Ablaufrolle 23, wodurch die gegen die Rampe 21 vorgespannte jeweilige Ablaufrolle 23 an der Rampe 21 aufsteigend abrollt. Die rechtwinklig zu den Abszissen 26 und 27 ausgerichtete Ordinate 28 verläuft parallel zu der Kippachse 9a mit der Ebene E.

Da die Rampe 21 beidseitig des Koordinatenursprungs U von der Ebene E weg ansteigt, zentriert sich jeweils eine Rolle 23 an einer Rampe 21 in der Neutralstellung N des Schalthebels an dem Koordinatenursprung U. Die Rampe 21 verläuft sowohl über der Abszisse 26 als auch über der Abszisse 27 anfangs flach ansteigend. Die an den Abschnitten mit dem flachen Anstieg aufsteigenden Ablaufrollen 23 erzeugen an dem zum Wählen einer Gasse mit Vorwärtsgängen geschwenkten Schalthebel 2 eine relativ geringe Wählkraft. Beim Schalten eines der Gänge aus den Gassen verharren die Ablaufrollen 23 jeweils in einer der mit I-II oder V-VI gekennzeichneten Positionen auf der jeweiligen Rampe 21. In diesen Positionen steht der Schalthebel 2 in einer der Gassen I-II oder V-VI, aus der dann in der jeweiligen Gasse durch Schwenken des Schaltfingers 2 ein Gang schaltbar ist. Wird der Schalthebel 2 mit der Konsole 10 über die Position V-VI weiter hinausgeschwenkt, so trifft die an der Rampe 21 aufsteigende Ablaufrolle 23 auf einen Abschnitt der Rampe 21 der stark von der Abszisse 26 weg abgeknickt ansteigt. An der Konsole 10 und somit an dem Schalthebel 2 wird aufgrund des steilen Anstieges eine Wählkraft erzeugt, die deutlich über der Wählkraft zur Wahl der Vorwärtsgänge liegt. Der Schalthebel 2 ist im Begriff sich in die Gasse zum Schalten des Rückwärtsganges R zu bewegen. Dem steilen Anstieg an der Rampe 21 folgt schließlich bis in die Position R wieder ein flacher Anstieg. Steht die Ablaufrolle 23 in der Position R, ist die Gasse des Rückwärtsganges R gewählt. Diese Stellung ist in der Figur 8b zeichnerisch dargestellt. Aus der Stellung R ist der Schalthebel 2 um die Schwenkachse 8a zum Schalten des Rückwärtsganges R schwenkbar.

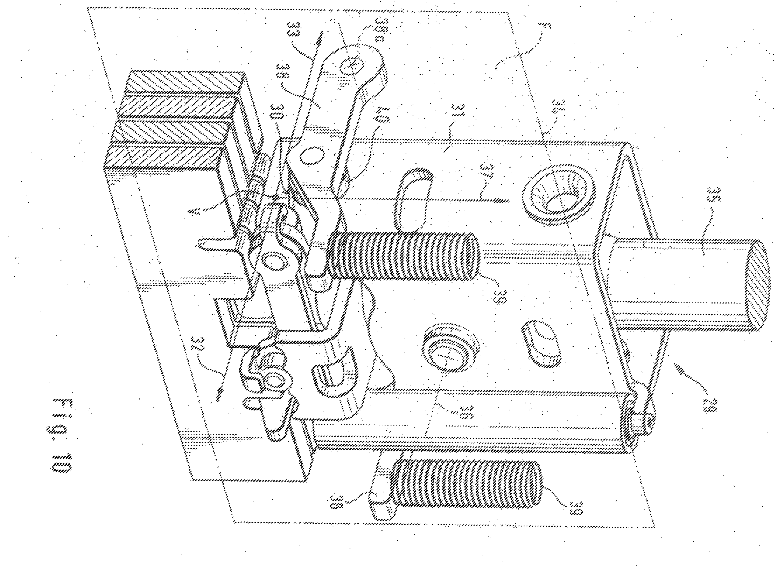

Figur 10 zeigt ein weiteres Ausführungsbeispiel einer erfindungsgemäßen Lageranordnung. Die Lageranordnung 29 ist ohne Gehäuse dargestellt. Ihr Aufbau entspricht im Wesentlichen der Lageranordnung 1 nach den Figuren 1 bis 9. Sie unterscheidet sich in ihrem Aufbau jedoch von der Anordnung der Vorrichtung zum Erhöhen der Wählkraft. Die Lageranordnung 29 weist zwei Rampen 30 auf, von denen eine zeichnerisch dargestellt und die andere durch eine Konsole 31 verdeckt ist. Die Rampe 30 steigt wie in dem vorgenannten Beispiel über zwei in entgegengesetzte Richtungen weisenden Abszissen 32 und 33 an. Die Abszissen gehen rechtwinklig von einer gedachten, mit der Kippachse 34 des Schalthebels 35 verlaufenden sowie senkrecht von der Schwenkachse 36 des Schalthebels 35 durchdrungenen Ebene F ab. Der Koordinatenursprung V des Koordinatensystems liegt in der Ebene F. Von dem Koordinatenursprung V geht rechtwinklig zu den Abszissen 32 und 33 eine mit der Ebene F verlaufende Ordinate 37 ab. Die Rampe 30 steigt über den Abszissen 32 von dem Koordinatenursprung V aus an und ist somit der Kippachse 34 zugewandt. Jeweils ein um einen Drehpunkt 38a schwenkbar zu dem nicht dargestellten Gehäuse gelagerter Hebel 38 ist mittels einer Druckfeder 39 gegen jeweils eine Rampe 30 vorgespannt. An jedem der Hebel 38 ist eine Ablaufrolle 39 drehbar befestigt. Jede der Federn 39 ist eine Druckfeder und drückt die jeweils einen der Hebel 38 mit der Ablaufrolle 40 gegen die Rampe 30. Der um die Kippachse 34 mit der Konsole 31 geschwenkte Schalthebel 35 schwenkt die Rampen 30 gegen die in Bewegungsrichtung der Rampe 30 an dem Hebel 38 feste Ablaufrolle 40. Die Ablaufrolle 40 steigt, an der Rampe 30 abrollend, an der Rampe 30 auf.

### Bezugszeichen

- 1: Lageranordnung
- 2: Schalthebel
- 2a: Schaltfinger
- 2b: Mittelachse
- 2c: Schaltknauf
- 3: Gehäuse
- 4: Schaltschiene
- 4a: Eingriffsnut
- 4b: Schlitz
- 5: Schaltschiene
- 5a: Eingriffsnut
- 6: Schaltschiene
- 6a: Eingriffsnut
- 7: Schaltschiene
- 7a: Eingriffsnut
- 8: Schwenkbolzen
- 8a: Schwenkachse
- 9: Kippbolzen
- 9a: Kippachse
- 10: Konsole
- 10a: Lagerauge
- 10b: Lagerauge
- 10c: Wand
- 10d: Öffnung
- 10e: Hülse
- 11: Anschlag
- 11a: Langloch
- 12: Sperrfinger
- 12a: Freimachung
- 13: Gleitlager
- 14: Langloch
- 15: Rastkontur
- 15a: Rastvertiefung
- 15b: Rastvertiefung
- 15c: Rastvertiefung
- 15d: Verlängerung
- 16: Rastelement
- 17: Rolle
- 17a: Bolzen
- 18: Kipphebel
- 18a: Kipppunkt
- 18b: Bolzen
- 18c: Ende
- 18d: Ende
- 19: Vorsprung
- 20: Feder
- 21: Rampe
- 22: Feder
- 23: Ablaufrolle
- 24: Hebel
- 24a: Drehpunkt
- 25: Blech
- 26: Abszisse
- 27: Abszisse
- 28: Ordinate
- 29: Lageranordnung
- 30: Rampe
- 31: Konsole
- 32: Abszisse
- 33: Abszisse
- 34: Kippachse
- 35: Schalthebel
- 36: Schwenkachse
- 37: Ordinate
- 38: Hebel
- 38a: Drehpunkt
- 39: Feder
- 40: Ablaufrolle

## Patentansprüche

1. Lageranordnung (1, 29) zur schwenkbaren Lagerung eines Schalthebels (2, 35) mittels einer Konsole (10, 31) in einem Gehäuse (3), wobei die Lageranordnung (1, 29) den Schalthebel (2, 35) in der Konsole (10, 31) um eine Schwenkachse (8a, 36) zu der Konsole (10, 31) schwenkbar lagert sowie den Schalthebel (2, 35) mit der Konsole (10, 31) um eine quer zur Schwenkachse (8a, 36) ausgerichtete Kippachse (9a, 34) schwenkbar zu dem Gehäuse (3) lagert, **dadurch gekennzeichnet, dass** die Lageranordnung (1, 29) eine Vorrichtung zum Erhöhen von Schalt- oder Wählkräften aufweist, wobei die Vorrichtung zumindest eine zur Konsole (10, 31) feste Rampe (21, 30) und mindestens einer mittels wenigstens einer Feder (22, 39) gegen die Rampe (21, 30) vorgespannten Ablaufrolle (23, 40) gebildet ist.

2. Lageranordnung nach Anspruch 1, **dadurch gekennzeichnet, dass** die Rampe (21, 30) bei Schwenkbewegungen des Schalthebels (2, 35) um die Kippachse (9a, 34) mit der Konsole (10, 31) schwenkt und die an dem Gehäuse (3) abgestützte Ablaufrolle (23, 40) dabei auf der Rampe (21, 30) abrollt.

3. Lageranordnung nach Anspruch 1, **dadurch gekennzeichnet, dass** der Schalthebel (2, 35) zum Wählen von Gassen um die Kippachse (9a, 34) und zum Schalten von Gängen um die Schwenkachse (8a, 36) schwenkbar ist und dass die Vorrichtung eine Vorrichtung zum Erhöhen der Wählkräfte ist.

4. Lageranordnung nach Anspruch 1, **dadurch gekennzeichnet, dass** die Rampe (21, 30) über wenigstens einer quer von einer gedachten Ebene abgehenden gedachten Abszisse (26, 27, 32, 33) ansteigt, wobei die Ebene mit der Kippachse (9a, 34) verläuft sowie dabei rechtwinklig von der Schwenkachse (8a, 36) durchdrungen ist und wobei die Rampe (21, 30) über der Abszisse (26, 27, 32 33) von der Ebene weg ansteigend verläuft, wodurch die Ablaufrolle (23, 40) bei einem um die Kippachse (9a, 34) geschwenkten Schalthebel (2, 35) gegen die Kraft der Feder (22, 39) an der Rampe aufsteigt.

5. Lageranordnung nach Anspruch 4, **dadurch gekennzeichnet, dass** die den Verlauf der Rampe (21) beschreibende Ordinate (28) parallel zu der Kippachse (9a) mit der Ebene verläuft.

6. Lageranordnung nach Anspruch 4, **dadurch gekennzeichnet, dass** die den Verlauf der Rampe beschreibende Ordinate (37) senkrecht zu der Kippachse (34) ausgerichtet mit der Ebene verläuft.

7. Lageranordnung nach Anspruch 1, **dadurch gekennzeichnet, dass** Ablaufrolle (23, 40) drehbar an einem Hebel (24, 38) befestigt ist , wobei der Hebel (24, 38) um einen zu dem Gehäuse (3) festen Drehpunkt (24a, 38a) schwenkbar ist und mit wenigstens einer von dem Drehpunkt (24a, 38a) entfernt an dem Hebel (24, 38) angreifenden Feder (22, 39) über die Ablaufrolle (23, 40) gegen die Rampe (21, 30) vorgespannt ist.

8. Lageranordnung nach Anspruch 7, **dadurch gekennzeichnet, dass** die durch den Drehpunkt (24a) verlaufende Drehachse des Hebels (24) und die Rotationsachse der Ablaufrolle (23) quer zur Kippachse (9a) des Schalthebels (2) ausgerichtet sind.

9. Lageranordnung nach Anspruch 7, **dadurch gekennzeichnet, dass** die durch den Drehpunkt (38a) verlaufende Drehachse des Hebels (38) und die Rotationsachse der Ablaufrolle (40) parallel zur Kippachse (34) des Schalthebels (35) ausgerichtet sind.

10. Lageranordnung nach Anspruch 7, **dadurch gekennzeichnet, dass** die Feder (39) eine Druckfeder ist.

11. Lageranordnung nach Anspruch 1, **dadurch gekennzeichnet, dass** an der Konsole (10, 31) zwei der Rampen (21, 30) angeordnet sind und dass gegen jede der Rampen (21, 30) jeweils ein Hebel (24, 38) mit einer Ablaufrolle (23, 40) vorgespannt ist.

12. Lageranordnung nach Anspruch 11, **dadurch gekennzeichnet, dass** die Hebel (24), die Konsole (10) mit den Rampen (21) zwischen sich nehmend, gegeneinander mittels wenigstens einer Zugfeder (22) verspannt sind.

13. Lageranordnung nach Anspruch 11, **dadurch gekennzeichnet, dass** die Feder (22, 39) jeweils an einem dem Drehpunkt (24a, 38a) abgewandten freien Ende des Hebels (24, 38) angreift.

14. Lageranordnung nach Anspruch 1, **dadurch gekennzeichnet, dass** die Rampe (21, 30) ausgehend von dem einer gedachten Ebene (E, F) liegenden Koordinatenursprung (U, V) über einer ersten Abszisse (26, 27, 32, 33) sowie über einer entgegengesetzt zu der ersten Abszisse (26, 27, 32, 33) gerichteten zweiten Abszisse (26, 27, 32, 33) beidseitig von der Ebene (E, F) weg ansteigt, wobei die Ebene (E, F) mit der Kippachse (9a, 34) verläuft.

15. Lageranordnung nach Anspruch 14, **dadurch gekennzeichnet, dass** der Schalthebel (2, 35) mittels der am Koordinatenursprung (U, V) zwischen den Abszissen (26, 27, 32, 33) an der Rampe (21, 30) zentrierten Ablaufrolle (23, 40) in einer Neutralstellung gehalten ist.

16. Lageranordnung nach Anspruch 14, **dadurch gekennzeichnet, dass** die Rampe (21, 30) über der ersten Abszisse (26, 33) von dem Koordinatenursprung (U; V) weg flach sowie über der zweiten Abszisse (27, 32) anfangs flach ansteigt, wobei die Rampe (21, 30) in ihrem weiteren Verlauf über der zweiten Abszisse (27, 32) an die flach ansteigende Rampe (21, 30) anschließend von der zweiten Abszisse (27, 32) weg abgeknickt ansteigt.

17. Lageranordnung nach Anspruch 14, **dadurch gekennzeichnet, dass** die Ablaufrolle (23, 40) abrollend gegen die flach ansteigenden Rampe (21, 30) vorgespannt ist, wenn der Schalthebel (2, 35) um die Kippachse (9a, 34) aus der Neutralstellung wahlweise in eine Schwenkrichtung schwenkt.

18. Lageranordnung nach Anspruch 1, **dadurch gekennzeichnet, dass** in der Lageranordnung (1, 29) eine Rastkontur (15) mit wenigstens einer ersten Rastvertiefung (15a, 15b, 15c) und einer zweiten Rastvertiefung (15a, 15b, 15c) vorgesehen ist und dass in der Lageranordnung (1, 29) ein Rastelement (16) gegen die Rastkontur (15) vorgespannt ist, wobei das Rastelement (16) bei Schwenkbewegungen des Schalthebels (2, 35) um die Kippachse (9a, 34) in die erste Rastvertiefung (15a, 15b, 15c) eingreift und bei Schwenkbewegungen des um die Schwenkachse (8a, 36) schwenkenden Schalthebels (2, 35) sich solange bewegt, bis das Rastelement (16) in der zweiten Rastausnehmung (15a, 15b, 15c) verrastet ist.
